# EUROPÄISCHE PATENTSCHRIFT

(11) **EP 3 380 375 B1**
(45) Veröffentlichungstag und Bekanntmachung des Hinweises auf die Patenterteilung: **19.06.2019**
(21) Anmeldenummer: 16784923.1
(22) Anmeldetag: 24.10.2016
(51) Int. Cl.: B60T 13/58, F16D 51/24, F16D 125/66

(54) **BETÄTIGUNGSVORRICHTUNG FÜR EINE BREMSE**
ACTUATION MECHANISM FOR A BRAKE
DISPOSITIF D'ACTIONNEMENT POUR FREIN

(30) Priorität: 25.11.2015 DE 102015120375
(43) Veröffentlichungstag der Anmeldung: 03.10.2018
(73) Patentinhaber: SAF-HOLLAND GmbH, 63856 Bessenbach (DE)
(72) Erfinder: DREWES, Olaf, 63743 Aschaffenburg (DE)
(74) Vertreter: Müller Schupfner & Partner Patent- und Rechtsanwaltspartnerschaft mbB
(86) Internationale Anmeldenummer: PCT/EP2016/075506
(87) Internationale Veröffentlichungsnummer: WO 2017/089050

(56) Entgegenhaltungen:
- DE-A1-102004 058 901
- FR-A1- 2 878 921
- GB-A- 516 951
- GB-A- 524 972
- US-A- 3 269 272
- US-A- 3 485 537
- US-A- 3 837 443
- US-A- 4 323 144
- US-B1- 6 749 271

## Beschreibung

Die Erfindung betrifft eine Betätigungsvorrichtung für eine Spreizkeil-Trommelbremse, insbesondere für Nutzfahrzeuge, eine Spreizkeiltrommelbremse sowie ein Betätigungssystem für Spreizkeil-Trommelbremsen.

Trommelbremsen für Nutzfahrzeuge sind im Stand der Technik bekannt. Sie umfassen üblicherweise eine Aktuatoreinheit, die durch einen pneumatisch oder hydraulisch betriebenen Bremszylinder gebildet sein kann, eine Stelleinheit/Spreizeinheit zum Verlagern eines Bremselements, welches mit einem Bremsbelag ausgestattet ist, sowie eine Übertragungseinheit zum Übertragen einer Kraft von der Aktuatoreinheit auf die Stelleinheit. Bei Spreizkeil-Trommelbremsen wird durch ein keilförmiges, längs verschiebbares Stellelement ein Bremsbelagträger mit einem daran angebrachten Bremsbelag radial nach außen verlagert und gegen die Innenfläche einer rotierenden Bremstrommel gedrückt. Die durch den Spreizkeil mit dem Bremszylinder gebildete Achse verläuft hierbei, je nach vorhandenem Platz, entweder parallel oder schräg zur Achse des zu bremsenden Rades. Das zwischen dem Bremszylinder und dem Stellelement angeordnete Übertragungselement kann so dimensioniert sein, dass der Bremszylinder, abhängig vom vorhandenen Bauraum, an einer günstigen Position angeordnet ist. Durch die Abmessung des Bremszylinders ist der Einbau einer solchen Betätigungsvorrichtung bei bestimmten Aggregaten, welche nur einen begrenzten Freiraum aufweisen, kaum oder nicht möglich. Aus der DE 10 2013 215 850 A1 ist es beispielsweise bekannt, derartige Einbauprobleme dadurch zu lösen, dass eine Umlenkeinrichtung vorgesehen wird, welche die von einem Aktuatoreinheit auf das Stellelement zu übertragende Kraft von einer ersten in eine zweite Richtung umlenkt. Durch diesen Richtungswechsel sollen verschiedene Positionierungen, insbesondere der Aktuatoreinheit, ermöglicht werden. Problematisch dabei ist allerdings, dass mechanische Umlenkungen dieser Art relativ schwer bauen und die hierbei verwendeten Spreizeinheiten eine zusätzliche und/oder massiv ausgeführte Befestigung an der Achse erfordern, um die Vibrationen und Beschleunigungen (ungefederte Massen) abzufangen. Des Weiteren ist pro Bremseinheit jeweils ein separater Bremszylinder erforderlich, was insbesondere bei Pendelachsen zu Platzproblemen führen kann.

Die US 6 749 271 B1 beschäftigt sich mit pneumatisch-hydraulischen Bremssystemen mit einem pneumatisch/hydraulischen Konverter.

Die GB 516 951 A zeigt eine Bremsbetätigung, welche sowohl hydraulisch als auch mechanisch betätigt werden kann.

Die US 3 485 537 A offenbart eine hydraulisch als auch mechanisch bedienbare Kontrolleinheit für Bremsen, wobei zwischen einem Kolben und dem Gehäuse ein Korb für eine Feder geformt wird.

Die US 3 837 443 A und die US 4 323 144 A befassen sich mit hydropneumatischen Bremsen für Eisenbahnen.

Die FR 2 878 921 A1 offenbart eine kombinierte Betriebsbrems- und Federspeicherbremsvorrichtung für Fahrzeuge, wobei eine mechanische Verbindung zwischen den beiden Vorrichtungen vorgesehen ist.

Die US 3 269 272 A zeigt einen entfernt angeordneten pneumatischen Hilfsbremsapplikator.

Die GB 524 972 A offenbart eine Betätigungsvorrichtung gemäß dem Oberbegriff vom Anspruch 1.

Die DE 10 2004 058 901 A1 offenbart eine kombinierte Betriebsbrems- und Federspeicherbremsvorrichtung mit hydraulischer Kopplung.

Es ist daher Aufgabe der vorliegenden Erfindung, eine Betätigungsvorrichtung, eine Spreizkeil-Trommelbremse sowie ein Betätigungssystem bereitzustellen, wodurch die vorgenannten Probleme beseitigt werden können.

Diese Aufgabe wird durch eine Betätigungsvorrichtung gemäß Anspruch 1, sowie durch eine Spreizkeil-Trommelbremse gemäß Anspruch 10 gelöst. Weitere Vorteile und Merkmale ergeben sich aus den Unteransprüchen sowie der Beschreibung und der beigefügten Figur.

Erfindungsgemäß umfasst eine Betätigungsvorrichtung für eine Spreizkeil-Trommelbremse, insbesondere für Nutzfahrzeuge, eine Spreizeinheit, welche ein Stellelement aufweist, das entlang einer Stellrichtung verlagerbar ist, wobei die Spreizeinheit derart ausgelegt ist, dass die Verlagerung des Stellelements unmittelbar über ein Fluid bzw. einen Fluiddruck erfolgen kann. Anders als im PKW-Bereich, wo sich zur Betätigung der Bremsbacken eine Aktuatoreinheit bzw. ein Bremszylinder direkt innerhalb der Bremstrommel befinden, ist bei Nutzfahrzeugen eine Konfiguration üblich, bei welcher innerhalb der Bremstrommel zu Betätigung eine extra Baueinheit angeordnet ist, beispielsweise ein S-Nocken oder im Falle der Spreizkeil-Trommelbremse eine entsprechende Spreizeinheit. Der entsprechende Bremszylinder/die Aktuatoreinheit sitzt dabei im Stand der Technik außerhalb der Bremstrommel und ist mit der Spreizeinheit mechanisch verbunden bzw. die Betätigung erfolgt mechanisch. Gerade diese mechanische Verbindung führt aber zu Platzproblemen, da die Lage bzw. Position des Bremszylinders durch die mechanische Verbindung vorgegeben ist. So sitzt der Bremszylinder entweder in Verlängerung einer Stellrichtung eines Spreizkeils oder, wenn eine mechanische Umlenkung vorgesehen ist, in einem festgelegten, unveränderbaren Winkel zu der Stellrichtung. Zweckmäßigerweise ist daher vorliegend die Spreizeinheit bzw. das Stellelement hydraulisch betätigbar. Gemäß einer Ausführungsform umfasst die Spreizeinheit ein Gehäuse, welches form- und/oder kraftschlüssig an einem Bremsträger der Trommelbremse befestigt ist. Innerhalb des Gehäuses sind beispielsweise längs einer Spreizachse, welche im Wesentlichen quer zur Stellrichtung verläuft, zwei beweglich gelagerte Kolben angeordnet, welche über einen Spreizkeil bewegt werden können. Damit kann eine Bewegung des Spreizkeils entlang der Stellrichtung auf die Kolben übertragen werden, welche sich dann entlang der Spreizachse bewegen, wodurch die Bremsbacken betätigt werden können und wodurch letztendlich die Bremswirkung erzielt werden kann. Der Spreizkeil befindet sich zweckmäßigerweise an einem Ende einer Schubstange, wobei das Stellelement die Schubstange umfasst. Das Fluid, welches zweckmäßigerweise unmittelbar auf das Stellelement wirkt, ist zum Beispiel ein gasförmiges, insbesondere bevorzugt ein flüssiges Medium wie ein (Hydraulik-)ÖI. Zweckmäßigerweise ist innerhalb des Gehäuses der Spreizeinheit eine Arbeitskammer bzw. ein Arbeitsvolumen ausgebildet, welche bzw. welches gleichzeitig als Führung des Stellelements entlang der Stellrichtung wirkt. Zweckmäßigerweise ist hierzu eine innere Kontur der Arbeitskammer rund, insbesondere kreisrund. Mit anderen Worten ist also zweckmäßigerweise eine zylindrische Arbeitskammer vorgesehen, wobei eine Außenwand der Arbeitskammer durch das Gehäuse der Spreizeinheit selbst gebildet ist. Weiter umfasst die Spreizeinheit bzw. das Gehäuse der Spreizeinheit zweckmäßigerweise zumindest eine Öffnung bzw. zumindest einen Anschlussbereich, über welchen das Fluid in die Spreizeinheit geführt werden kann. Da die Betätigung des Stellelements nun nicht mechanisch sondern hydraulisch erfolgt, ist es zunächst unerheblich, wo die Öffnung bzw. der oder die Anschlüsse zum Einbringen des Fluids positioniert ist/sind. Der Anschluss kann an einer Stirnseite der Spreizeinheit liegen. Der Anschluss kann aber auch beispielsweise auf einer Mantelfläche angeordnet sein, sodass quasi ein radialer Zugang in die Spreizeinheit bereitgestellt wird. Die Verwendung eines Fluids zur Betätigung des Stellelements bewirkt also eine äußerst große Variabilität, welche insbesondere der Anordnung einer Gebereinheit zugutekommt.

Erfindungsgemäß umfasst die Betätigungsvorrichtung eine Gebereinheit, welche ein Geberelement aufweist, das entlang einer Geberrichtung verlagerbar ist, wobei die Geberrichtung relativ zur Stellrichtung vorteilhafterweise frei wählbar ist, dadurch dass das Geberelement und das Stellelement unmittelbar über das Fluid in Wirkverbindung stehen. Die Gebereinheit ist dazu vorgesehen, den Fluiddruck aufzubauen bzw. das Fluid zur Spreizeinheit bzw. zu dem darin angeordneten Stellelement zu fördern/transportieren. Der Ausdruck "Wirkverbindung" bedeutet dabei also, dass eine Bewegung des Geberelements durch das Fluid eine Bewegung des Stellelements bewirkt. Mit anderen Worten wird also eine Kraft des Geberelements durch das Fluid auf das Stellelement übertragen. Die Bewegungsrichtung des Geberelements sowie die Bewegungsrichtung des Stellelements sind dabei mechanisch exakt vorgegeben. Die Fluidkopplung ermöglicht aber nun, dass die Positionierung der Gebereinheit relativ zur Spreizeinheit frei wählbar ist. Mit Vorteil ergibt sich also eine hydraulische Umlenkung zwischen der Spreizeinheit und der Gebereinheit, wobei die Richtung der Umlenkung frei wählbar ist.

Vorteilhafterweise ist die Gebereinheit bezogen auf die Spreizeinheit ortsfern angeordnet. Dies bedeutet, dass die Gebereinheit nicht an oder ggf. nicht einmal in der Nähe der Trommelbremse bzw. der Spreizeinheit angeordnet ist bzw. sein muss. Sie kann auch an der Trommelbremse bzw. nahe der Spreizeinheit befestigt werden. Grundsätzlich ergibt sich aber durch die hydraulische Umlenkung die Möglichkeit, die Gebereinheit (bzw. die Gebereinheiten) dort anzuordnen, wo es aus Package-Gesichtspunkten am sinnvollsten erscheint. Der Begriff ortsfern ist dabei nicht dahingehend auszulegen, dass die Gebereinheit möglichst weit weg angeordnet werden muss. Gemeint ist vielmehr die Variabilität, die durch die hydraulische Umlenkung bereitgestellt wird und welche eine flexible bzw. variable bzw. veränderbare Anordnung der Gebereinheit (bzw. der Aktuatoreinheit) ermöglicht, beispielswiese nur wenige Zentimeter von der Trommelbremse entfernt bzw. auch weiter weg, beispielsweise am Fahrzeugrahmen oder einer Fahrwerkskomponente.

Gemäß einer Ausführungsform weist die Betätigungsvorrichtung ein Leitungselement auf, welches die Gebereinheit und die Spreizeinheit fluidleitend verbindet. Hierbei kann es sich um ein bekanntes Hydraulikrohr aus Kunststoff oder Metall bzw. Mischungen der vorgenannten Materialien, handeln, welches auf die auftretenden Arbeitsdrücke abgestimmt ist. Ein derartiges Hydraulikrohr kann mehr oder weniger beliebig gebogen werden bzw. sein, sodass einer Positionierung der Gebereinheit relativ zur Spreizeinheit quasi keine Grenzen gesetzt sind. Die Gebereinheit kann in Fahrtrichtung nach vorne oder nach hinten versetzt angeordnet sein, sie kann bezogen auf die Fahrbahnebene in Bezug auf die Spreizeinheit/Trommelbremse höher oder tiefer angeordnet sein etc. Auch der Abstand der Gebereinheit relativ zur Spreizeinheit ist frei wählbar.

Gemäß einer Ausführungsform ist das Leitungselement zumindest abschnittsweise flexibel ausgebildet. Damit wird ermöglicht, dass auch dann, wenn die Spreizeinheit und die Gebereinheit bereits verbunden sind, eine Positionierung/Verlagerbarkeit relativ zueinander möglich ist. Das System kann damit z. B. auch vormontiert werden, bevor es eingebaut wird, da durch die zumindest abschnittsweise vorgesehene Flexibilität des Leitungselements eine finale Position, beispielsweise der Gebereinheit, auch dann gefunden werden kann, wenn Gebereinheit und Spreizeinheit bereits über das Leitungselement verbunden sind.

Erfindungsgemäß umfasst das Stellelement einen Stellkolben, auf welchen der Fluiddruck unmittelbar wirkt, wobei eine Kolbenfläche des Stellkolbens bevorzugt flach bzw. eben ausgebildet ist. Dabei ist der Kolben zweckmäßigerweise rund, insbesondere kreisrund und bewegt sich innerhalb der vorher bereits beschriebenen Arbeitskammer entlang der Stellrichtung. Mit dem Stellkolben ist zweckmäßigerweise ebenfalls die bereits beschriebene Schubstange verbunden, sodass über den Stellkolben mittelbar über die Schubstange auf den Spreizkeil die Kraft bzw. die Bewegung des Fluids bzw. des Fluiddrucks übertragen wird. Vorteilhafterweise erfolgt die Übertragung des Fluiddrucks dabei unmittelbar im Stellkolben, ohne die weitere Verwendung mechanischer Umlenk- oder Ausgleichselemente. Dies bedeutet, dass die Bewegung des Stellkolbens fest durch die Geometrie der Arbeitskammer bzw. des Gehäuses der Spreizeinheit vorgegeben ist, die eigentliche Betätigung des Stellkolbens aber dadurch, dass sie durch das Fluid bzw. durch den Fluiddruck bewirkt wird, nicht von der Stellrichtung abhängig ist.

Wie bereits erwähnt, weist die Spreizeinheit zweckmäßigerweise ein Gehäuse auf, in welchem das Stellelement angeordnet ist, wobei der Stellkolben innerhalb des Gehäuses angeordnet ist. Dies bedeutet, dass die Betätigung des Stellkolbens innerhalb des Gehäuses erfolgt und keine beweglichen Bauteile außerhalb des Gehäuses der Spreizeinheit geführt werden müssen. Dadurch, dass der Stellkolben bzw. dessen Kolbenfläche innerhalb des Gehäuses liegen, kann damit also eine äußerst kompakte Spreizeinheit realisiert werden.

Gemäß einer Ausführungsform ist das Gehäuse der Spreizeinheit im Wesentlichen einteilig ausgebildet, wobei das Gehäuse z. B. die Gestalt eines im Wesentlichen zylindrischen Hohlkörpers aufweist.

Erfindungsgemäß umfasst das Geberelement einen Geberkolben, wobei eine Kolbenfläche des Geberkolbens im Wesentlichen der Kolbenfläche des Stellkolbens entspricht. Bevorzugt ist auch der Geberkolben des Geberelements, zum Beispiel ein zylindrischer Körper, wobei die Kolbenfläche des Geberkolbens rund, insbesondere kreisrund ist.

In der Folge ist die Betätigungsvorrichtung also bevorzugt derart ausgelegt, dass ein Verfahrweg des Geberkolbens im Wesentlichen einem Verfahrweg des Stellkolbens entspricht. Damit ist insbesondere gemeint, dass eine Länge der Verfahrwege einander entspricht bzw. zueinander korreliert.

Alternativ können die Kolbenflächen des Geberkolbens und des Stellkolbens unterschiedlich dimensioniert sein, wenn beispielsweise eine erhöhte Bremskraft erzielt werden soll. In diesem Fall ist zweckmäßigerweise eine Kolbenfläche des Stellkolbens größer ausgebildet als die Kolbenfläche des Geberkolbens. Beispielsweise liegt das Verhältnis von der Kolbenfläche des Stellkolbens zu der des Geberkolbens zwischen 1,5 bis 1,1, zweckmäßigerweise in einem Verhältnis von 1,4 bis 1,2. Somit lassen sich für unterschiedliche Anforderungen wie beispielsweise unterschiedliche Fahrzeuggewichte, mit ein und derselben Spreizeinheit sehr einfach unterschiedliche Bremsleistungen erzielen. Alternativ können die vorgenannten Verhältnisse auch umgekehrt ausgebildet sein, also beispielsweise in einem Bereich von 0,6 bis 0,9 liegen.

Gemäß einer Ausführungsform umfasst die Betätigungsvorrichtung eine Aktuatoreinheit, welche ausgelegt ist, den Geberkolben bzw. das Geberelement zu betätigen, wobei die Aktuatoreinheit bevorzugt ein pneumatisches Betätigungselement, insbesondere ein pneumatischer Bremszylinder ist. Vorliegend handelt es sich also zweckmäßigerweise um eine Spreizeinheit für Trommelbremsen, insbesondere für Nutzfahrzeuge, wobei die Spreizeinheit über eine hydraulische Umlenkung durch einen pneumatischen Betätigungszylinder/Bremszylinder betätigt wird. Bei heute am Markt befindlichen Spreizeinheiten wird die Zylinderposition lediglich durch die Neigung der Spreizeinheit (zur Mittelachse der Nutzfahrzeugachse) sowie durch die Drehlage der Bremse selbst variiert, eine 90°-Umlenkung zum Beispiel wurde bei Spreizkeilbremsen bisher nicht realisiert. Damit war ein Einbau der Spreizkeilbremse in bestimmte Aggregate, die nur einen begrenzten Freiraum für Bremszylinder aufweisen, oft nicht möglich und die Einsatzmöglichkeiten von Spreizkeil-Trommelbremsen limitiert. Die hier beschriebene Betätigungsvorrichtung beseitigt aber genau diese Nachteile. Zudem kann eine sehr kompakte, leichte und kostenoptimierte Spreizeinheit realisiert werden, welche als bewegliches Bauteil lediglich das Stellelement aufweisen muss. Die Spreizeinheit muss also nicht das Gewicht einer etwaigen mechanischen Umlenkung bzw. das Gewicht der Aktuatoreinheit tragen und kann entsprechend leicht gestaltet und ausgelegt werden. Im Übrigen können einfach Standardkomponenten einer Betätigungsvorrichtung ohne Umlenkung verwendet werden, solange gewährleistet ist, dass das Stellelement hydraulisch betrieben werden kann. Beispielsweise können die gleichen Aktuatoreinheiten/Bremszylinder verwendet werden wie bei einer Spreizeinheit ohne die hydraulische Umlenkung. Durch die rein hydraulische Umlenkung entfällt mit Vorteil ein außen liegendes Gestänge, welches in der Regel anfällige Lagerstellen aufweist, empfindlich auf äußere Einflüsse reagiert und damit die Zuverlässigkeit der Bremse reduzieren würde. Die Spreizeinheit selbst ist zweckmäßigerweise wartungsarm bzw. wartungsfrei. Zudem kann sie unabhängig von der Bremse komplett vormontiert werden, wobei leicht unterschiedliche Bremsengrößen abgedeckt werden können. Vorteilhafterweise können also viele Spur-Kombinationen bzw. Kombinationen verschiedener Abstände der Lenker voneinander abgedeckt werden.

Gemäß einer Ausführungsform können die Gebereinheit und die Aktuatoreinheit ineinander integriert sein. Alternativ kann es sich um zwei getrennte Bauteile handein, welche über einen entsprechenden Anordnungsbereich z. B. form- und/oder kraftschlüssig miteinander verbunden sein.

Erfindungsgemäß ist eine Trommelbremse, insbesondere für Nutzfahrzeuge, vorgesehen, welche eine Gebereinheit umfasst, wobei die Gebereinheit in Bezug auf die Trommelbremse ortsfern angeordnet ist. Bei der Trommelbremse handelt es sich bevorzugt um eine Spreizkeil-Trommelbremse, bei der Gebereinheit bevorzugt um eine Gebereinheit, welche die bereits genannten Vorteile und Merkmale aufweist.

Erfindungsgemäß umfasst ein Betätigungssystem für Trommelbremsen, insbesondere für Spreizkeil-Trommelbremsen, eine Gebereinheit, bei welcher zumindest zwei Betätigungsvorrichtungen von Trommelbremsen, insbesondere Spreizeinheiten, über zumindest zwei Leitungselemente verbunden sind. Das Merkmal betreffend die zumindest zwei Leitungselemente ist dahingehend zu verstehen, dass jede Betätigungsvorrichtung mit der Gebereinheit verbunden ist. Der große Vorteil, der sich daraus ergibt ist der, dass mit einer Aktuatoreinheit/Gebereinheit beide Betätigungsvorrichtungen/Spreizeinheiten bzw. Radbremsen bzw. mehrere gleichzeitig angesteuert werden können, was nicht nur die Kosten reduziert sondern auch hinsichtlich des benötigten Bauraums äußerst vorteilhaft ist.

Zweckmäßigerweise ist dabei das Betätigungssystem derart ausgelegt, dass die Kolbenfläche eines Geberkolbens der Gebereinheit im Wesentlichen einer Summe der Kolbenflächen der Stellkolben der Betätigungsvorrichtungen, insbesondere Spreizeinheiten, entspricht. Bei der Gebereinheit handelt es sich bevorzugt um eine Gebereinheit, welche die bereits genannten Vorteile und Merkmale aufweist. Das Gleiche gilt bevorzugt in Bezug auf die Spreizeinheit.

Gegebenenfalls können mit einer Aktuatoreinheit selbstverständlich auch mehr als zwei, beispielsweise vier, sechs, etc. Betätigungsvorrichtungen/Spreizeinheiten angesteuert werden.

Durch die erfindungsgemäße Betätigungsvorrichtung, die Trommelbremse bzw. das Betätigungssystem, wird ermöglicht, bei einer Betätigungsvorrichtung/Spreizeinheit für (Spreizkeil-)Trommelbremsen die Anordnung der Aktuatoreinheit durch eine hydraulische Umlenkung nahezu beliebig zu wählen, sodass ein Einbau der (Spreizkeil-)Trommelbremse auch in bauraumtechnisch anspruchsvolle Aggregate und Federungssysteme (Pendelachs-Aggregate, Lenkachsen, Einzelradaufhängungen, Portalachsen, etc.) möglich wird. Unter Ausnutzung aller Freiheitsgrade kann die Aktuatoreinheit/der Bremszylinder räumlich nahezu beliebig angeordnet werden. Des Weiteren ist es möglich, mit einer Aktuatoreinheit bzw. mit einem Bremszylinder zwei Spreizeinheiten bzw. Radbremsen gleichzeitig anzusteuern, sodass der benötigte Bauraum weiter reduziert wird.

Erfindungsgemäß ist auch die Verwendung einer erfindungsgemäßen Spreizeinheit in bzw. an einer Spreizkeil-Trommelbremse, wobei die bereits genannten Vorteile und Merkmale auch für die Verwendung gelten sollen.

Weitere Vorteile und Merkmale ergeben sich aus der nachfolgenden Beschreibung bevorzugter Ausführungsformen der erfindungsgemäßen Betätigungsvorrichtung, der erfindungsgemäßen Spreizkeil-Trommelbremse bzw. des erfindungsgemäßen Betätigungssystems mit Bezug auf die beigefügte Figur.

Es zeigt:

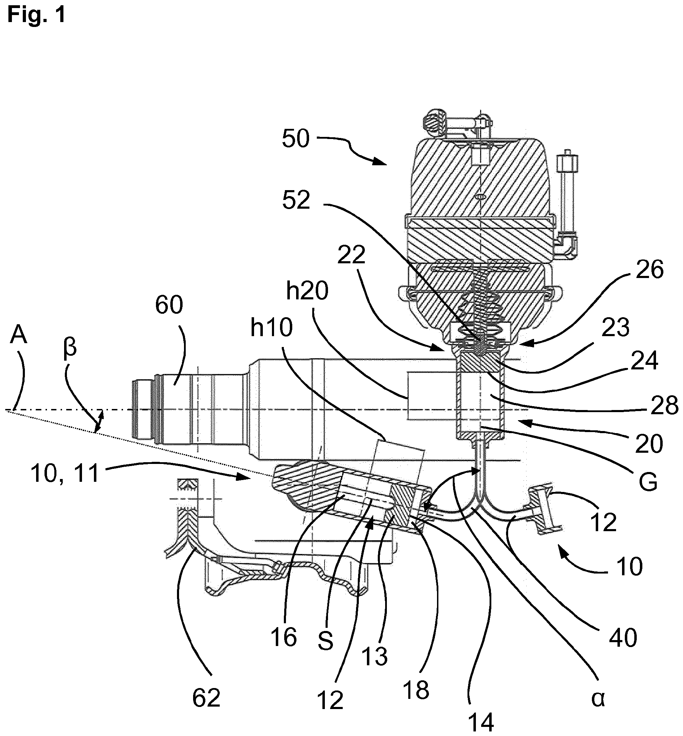

- Figur 1:: einen Längsschnitt durch eine Ausführungsform einer Betätigungsvorrichtung einer Spreizkeil-Trommelbremse.

**Fig. 1** zeigt einen Längsschnitt durch eine Ausbildungsform einer Betätigungsvorrichtung umfassend zwei Spreizeinheiten 10, welche über Leitungselemente 40 mit einer Gebereinheit 20 verbunden sind. Die Gebereinheit 20 wiederum ist über einen Anschlussbereich 26 form- und/oder kraftschlüssig mit einer Aktuatoreinheit 50 bzw. mit einem Bremszylinder 50, welcher gemäß einer bevorzugten Ausführungsform pneumatisch betrieben ist, verbunden. Hierzu ist ein Betätigungselement 52 vorgesehen, welches mit einem Geberkolben 23 eines Geberelements 22 verbunden ist. Das Betätigungselement 52 überträgt eine Bewegung der Aktuatoreinheit 50 bzw. des Bremszylinders 50 entlang einer Geberrichtung G auf den Geberkolben 23, welcher eine Kolbenfläche 24 aufweist, die mit einer Arbeitskammer 28 der Gebereinheit 20 verbunden ist bzw. die Arbeitskammer 28 zumindest bereichsweise begrenzt. Bei einer Bewegung ergibt sich damit ein Verfahrweg h20 des Geberkolbens 23 bzw. der Kolbenfläche 24 nach unten, wodurch ein in der Arbeitskammer 28 bzw. in den Leitungselementen 40 vorhandenes Fluid einen Stellkolben 13 eines Stellelements 12 der Spreizeinheit 10, bzw. in diesem Fall, der beiden Spreizeinheiten 10 bewirkt. Damit wird eine Kolbenfläche 14 des Stellkolbens 13 entlang einer Stellrichtung S um einen Verfahrweg h10 bewegt bzw. verfahren. Das Stellelement 12 ist in einem entsprechenden Gehäuse 11 angeordnet. Innerhalb des Gehäuses 11 ist, ähnlich wie bei der Gebereinheit 20, eine Arbeitskammer 18 ausgebildet, welche sich dementsprechend vergrößert bzw. verkleinert beim Verfahren des Stellelements 12. Bei der hier dargestellten Ausführungsform stützt sich die Spreizeinheit 10 an einem Achsrohr 60 ab, wobei zwischen einer Achsrohrrichtung A und einer Stellrichtung S der Spreizeinheit 10 ein Winkel β gebildet wird. Gemäß verschiedenen Ausführungsformen kann der Winkel β in einem Bereich von 0 bis 80°, bevorzugt in einem Bereich von etwa 20 bis 60° liegen. Zwischen der Stellrichtung S und der Geberrichtung G wird weiter ein Winkel α gebildet, welcher beliebige Werte zwischen 0 und 180° annehmen kann. In bevorzugten Ausführungsformen liegt der Winkel zwischen 20 und 160°. Die große Variabilität ist ein großer Vorteil, die aus der hydraulischen Umlenkung resultiert. Neben dieser Winkelvariabilität können die Gebereinheit 20 und die Spreizeinheit 10 auch entlang einer Fahrtrichtung versetzt sein. Dies ist in dieser Ansicht allerdings nicht dargestellt und auch nicht zu erkennen. Angedeutet ist noch eine Felge 62, welche drehbar an dem Achsrohr 60 befestigt ist. Der übrige Aufbau der Trommelbremse ist aus dem Stand der Technik bekannt und ist aus Übersichtlichkeitsgründen nicht weiter dargestellt. In Bezug auf die Spreizeinheit 10 ist beispielsweise noch anzumerken, dass an einem linken Ende einer Schubstange 16 ein entsprechender Spreizkeil vorhanden ist, worüber entlang einer Spreizrichtung entsprechende Kolben zur Betätigung der Bremsbacken angeordnet sind. Vorliegend ist nicht nur eine Betätigungsvorrichtung, sondern ein ganzes Betätigungssystem dargestellt, da hier die Aktuatoreinheit 50 mit zwei Spreizeinheiten 10 verbunden ist, wobei die rechte Spreizeinheit 10 nur ansatzweise dargestellt ist. Insofern ist eine Gebereinheit 20 fluidleitend über entsprechende Leitungselemente 40 mit zwei Spreizeinheiten 10 verbunden.

### Bezugszeichenliste

- 10: Spreizeinheit
- 11: Gehäuse
- 12: Stellelement
- 13: Stellkolben
- 14: Kolbenfläche
- 16: Schubstange
- 18: Zylindervolumen/Arbeitskammer/Arbeitsvolumen
- 20: Gebereinheit
- 22: Geberelement
- 23: Geberkolben
- 24: Kolbenfläche
- 26: Anordnungsbereich
- 28: Zylindervolumen/Arbeitskammer/Arbeitsvolumen
- 40: Leitungselement
- 50: Aktuatoreinheit
- 52: Betätigungselement
- 60: Achsrohr
- 62: Felge
- h10: Verfahrweg (Stellelement)
- h20: Verfahrweg (Geberelement)
- G: Geberrichtung
- S: Stellrichtung
- α, β: Winkel

## Patentansprüche

1. Betätigungsvorrichtung für eine Spreizkeil-Trommelbremse, insbesondere für Nutzfahrzeuge,
umfassend eine Spreizeinheit (10), welche ein Stellelement (12) aufweist, das entlang einer Stellrichtung (S) verlagerbar ist,
eine Gebereinheit (20), welche ein Geberelement (22) aufweist, das entlang einer Geberrichtung (G) verlagerbar ist,
wobei die Spreizeinheit (10) derart ausgelegt ist, dass die Verlagerung des Stellelements (12) unmittelbar über ein Fluid- bzw. einen Fluiddruck erfolgen kann,
wobei das Geberelement (22) und das Stellelement (12) unmittelbar über das Fluid in Wirkverbindung stehen,
wobei das Geberelement (22) einen Geberkolben (23) umfasst,
wobei das Stellelement (12) einen Stellkolben (13) umfasst, auf welchen der Fluiddruck unmittelbar wirkt,
**dadurch gekennzeichnet, dass** eine Kolbenfläche (24) des Geberkolbens (23) im Wesentlichen der Kolbenfläche (14) des Stellkolbens (13) entspricht.

2. Betätigungsvorrichtung nach Anspruch 1,
wobei die Gebereinheit (20) bezogen auf die Spreizeinheit (10) ortsfern angeordnet ist.

3. Betätigungsvorrichtung nach Anspruch 2,
umfassend ein Leitungselement (40), welches die Gebereinheit (20) und die Spreizeinheit (10) fluidleitend verbindet.

4. Betätigungsvorrichtung nach Anspruch 3,
wobei das Leitungselement (40) zumindest abschnittsweise flexibel ausgebildet ist.

5. Betätigungsvorrichtung nach einem der vorhergehenden Ansprüche,
wobei eine Kolbenfläche (14) des Stellkolbens (13) flach bzw. eben ausgebildet ist.

6. Betätigungsvorrichtung nach einem der vorhergehenden Ansprüche, wobei die Spreizeinheit (10) ein Gehäuse (11) aufweist, in welchem das Stellelement (12) angeordnet ist, und
wobei der Stellkolben (13) innerhalb des Gehäuses (11) angeordnet ist.

7. Betätigungsvorrichtung nach Anspruch 6,
wobei das Gehäuse (11) der Spreizeinheit (10) im Wesentlichen einteilig ausgebildet ist.

8. Betätigungsvorrichtung nach einem der vorhergehenden Ansprüche,
derart ausgelegt, dass ein Verfahrweg (h20) des Geberkolbens (23) im Wesentlichen einem Verfahrweg (h10) des Stellkolbens (13) entspricht.

9. Betätigungsvorrichtung nach einem der vorhergehenden Ansprüche, umfassend eine Aktuatoreinheit (50), welche ausgelegt ist, den Geberkolben (23) bzw. das Geberelement (22) zu betätigen,
wobei die Aktuatoreinheit (50) bevorzugt ein pneumatisches Betätigungselement, insbesondere ein pneumatischer Bremszylinder, ist.

10. Trommelbremse, insbesondere Spreizkeil-Trommelbremse für Nutzfahrzeuge,
umfassend eine Betätigungsvorrichtung nach einem der vorhergehenden Ansprüche.

## Claims

1. An actuation mechanism for a wedge-actuated drum brake, in particular for commercial vehicles,
comprising a spreading unit (10) which has an actuating element (12) which is displaceable along an actuating direction (S),
a master unit (20) which has a master element (20) which is displaceable along a master direction (G),
wherein the spreading unit (10) is configured in such a way that the displacement of the actuating element (12) occurs directly via a fluid or a fluid pressure,
wherein the master element (22) and the actuating element (12) are in direct operative connection via the fluid,
wherein the master element (22) comprises a master piston (23),
wherein the actuating element (12) comprises an actuating piston (13) on which the fluid pressure acts directly,
**characterized in that** a piston face (24) of the master piston (23) corresponds substantially to the piston face (14) of the actuating piston (13).

2. The actuation mechanism as claimed in claim 1,
wherein the master unit (20) is arranged at a remote position with respect to the spreading unit (10).

3. The actuation mechanism as claimed in claim 2,
comprising a line element (40) which fluidically connects the master unit (20) and the spreading unit (10).

4. The actuation mechanism as claimed in claim 3,
wherein the line element (40) is of flexible design at least in certain portions.

5. The actuation mechanism as claimed in one of the preceding claims,
wherein a piston face (14) of the actuating piston (13) is designed to be flat or planar.

6. The actuation mechanism as claimed in one of the preceding claims,
wherein the spreading unit (10) has a housing (11) in which the actuating element (12) is arranged, and
wherein the actuating piston (13) is arranged within the housing (11).

7. The actuation mechanism as claimed in claim 6,
wherein the housing (11) of the spreading unit (10) is of substantially one-part design.

8. The actuation mechanism as claimed in one of the preceding claims, configured in such a way that a displacement travel (h20) of the master piston (23) corresponds substantially to a displacement travel (h10) of the actuating piston (13).

9. The actuation mechanism as claimed in one of the preceding claims, comprising an actuator unit (50) which is configured to actuate the master piston (23) or the master element (22),
wherein the actuator unit (50) is preferably a pneumatic actuation element, in particular a pneumatic brake cylinder.

10. A drum brake, in particular a wedge-actuated drum brake for commercial vehicles,
comprising an actuation mechanism as claimed in one of the preceding claims.

## Revendications

1. Dispositif d'actionnement pour un frein à tambour à cale d'écartement, en particulier pour des véhicules utilitaires,
comportant une unité d'écartement (10) qui comprend un élément de réglage (12) mobile le long d'une direction de réglage (S),
un ensemble émetteur (20) qui comprend un élément émetteur (22) déplaçable le long d'une direction d'émission (G),
dans lequel
l'unité d'écartement (10) est conçue de telle sorte que le déplacement de l'élément de réglage (12) peut s'effectuer directement par un fluide ou par une pression de fluide,
l'élément émetteur (22) et l'élément de réglage (12) sont directement en liaison d'action par le fluide,
l'élément émetteur (22) comprend un piston émetteur (23),
l'élément de réglage (12) comprend un piston de réglage (13) sur lequel la pression de fluide agit directement,
**caractérisé en ce que**
une surface (24) du piston émetteur (23) correspond sensiblement à la surface (14) du piston de réglage (13).

2. Dispositif d'actionnement selon la revendication 1,
dans lequel
l'ensemble émetteur (20) est agencé à distance de l'unité d'écartement (10).

3. Dispositif d'actionnement selon la revendication 2,
comportant un élément formant conduit (40) qui relie l'ensemble émetteur (20) et l'unité d'écartement (10) sur le plan fluidique.

4. Dispositif d'actionnement selon la revendication 3,
dans lequel
l'élément formant conduit (40) est réalisé au moins localement flexible.

5. Dispositif d'actionnement selon l'une des revendications précédentes, dans lequel
une surface (14) du piston de réglage (13) est réalisée de façon plate ou plane.

6. Dispositif d'actionnement selon l'une des revendications précédentes, dans lequel
l'unité d'écartement (10) comprend un boîtier (11) dans lequel l'élément de réglage (12) est agencé, et
le piston de réglage (13) est agencé à l'intérieur du boîtier (11).

7. Dispositif d'actionnement selon la revendication 6,
dans lequel
le boîtier (11) de l'unité d'écartement (10) est réalisé sensiblement d'un seul tenant.

8. Dispositif d'actionnement selon l'une des revendications précédentes, qui est conçu de telle sorte qu'un trajet de déplacement (h20) du piston émetteur (23) correspond sensiblement à un trajet de déplacement (h10) du piston de réglage (13).

9. Dispositif d'actionnement selon l'une des revendications précédentes, comprenant un ensemble actionneur (50) qui est conçu pour actionner le piston émetteur (23) ou l'élément émetteur (22),
l'ensemble actionneur (50) étant de préférence un élément d'actionnement pneumatique, en particulier un cylindre de frein pneumatique.

10. Frein à tambour, en particulier frein à tambour à cale d'écartement pour des véhicules utilitaires,
comportant un dispositif d'actionnement selon l'une des revendications précédentes.
